(19) Europäisches Patentamt / European Patent Office / Office européen des brevets

(11) **EP 3 352 936 B1**

(12) **EUROPEAN PATENT SPECIFICATION**

(45) Date of publication and mention of the grant of the patent:
**04.03.2026 Bulletin 2026/10**

(21) Application number: **16774593.4**

(22) Date of filing: **19.09.2016**

(51) International Patent Classification (IPC):
**B23F 9/10** *(2006.01)* **B23F 21/22** *(2006.01)*
**B23F 15/06** *(2006.01)*

(52) Cooperative Patent Classification (CPC):
**B23F 9/105; B23F 15/06; B23F 21/223; B23F 21/226**

(86) International application number:
**PCT/US2016/052465**

(87) International publication number:
**WO 2017/053227 (30.03.2017 Gazette 2017/13)**

(54) **METHOD OF MANUFACTURING SPIRAL TOOTH FACE COUPLINGS**

VERFAHREN ZUR HERSTELLUNG VON SPIRALVERZAHNTEN KUPPLUNGEN

PROCÉDÉ POUR FABRIQUER DES COUPLAGES À FACE DENTÉE EN SPIRALES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.09.2015 US 201562221351 P**

(43) Date of publication of application:
**01.08.2018 Bulletin 2018/31**

(73) Proprietor: **The Gleason Works**
**Rochester, NY 14692-2970 (US)**

(72) Inventor: **STADTFELD, Hermann, J.**
**Webster, NY 14580 (US)**

(74) Representative: **Leinweber & Zimmermann Patentanwalts-PartG mbB**
**European Patent Attorneys**
**Viktualienmarkt 8**
**80331 München (DE)**

(56) References cited:
EP-A1- 2 412 467   EP-A1- 2 871 015
US-A- 3 760 476   US-A- 3 961 403
US-A- 4 093 391   US-A- 4 514 118
US-B2- 6 712 566

## Description

### Field of the Invention

The invention is directed to face couplings.

### Background of the Invention

Face couplings with spiral shaped teeth have pitch angles close to or equal to 90°. They can be manufactured by an intermittent indexing (face milling) process where one tooth slot is formed with each plunge of a cutting tool, or by a continuous indexing (face hobbing) process where all tooth slots are formed with a single plunge of a cutting tool. Face hobbing comprises cutting blades arranged about a cutter, not in line with each other, but in groups, with usually two or three cutting blades per group. Unlike most face milling processes, in which all cutting blades pass through the tooth slot during its formation, face hobbing comprises each successive group of cutting blades passing through respective successive tooth slots with each blade in the group forming a cut completely along the longitudinal portion of the tooth slot. The cutter and the workpiece rotate in a timed relationship with each other thereby allowing continual indexing of the workpiece and continual formation of each tooth slot of the gear or face coupling.

In use, there is no relative motion between the teeth after the two face coupling members are engaged. As a result, the virtual (i.e. theoretical) generating gear, which is used in the gear theoretical model to create the two mating gear (i.e. coupling) members, a right-hand member and a left-hand member, is identical on each of its two sides to one of the coupling members.

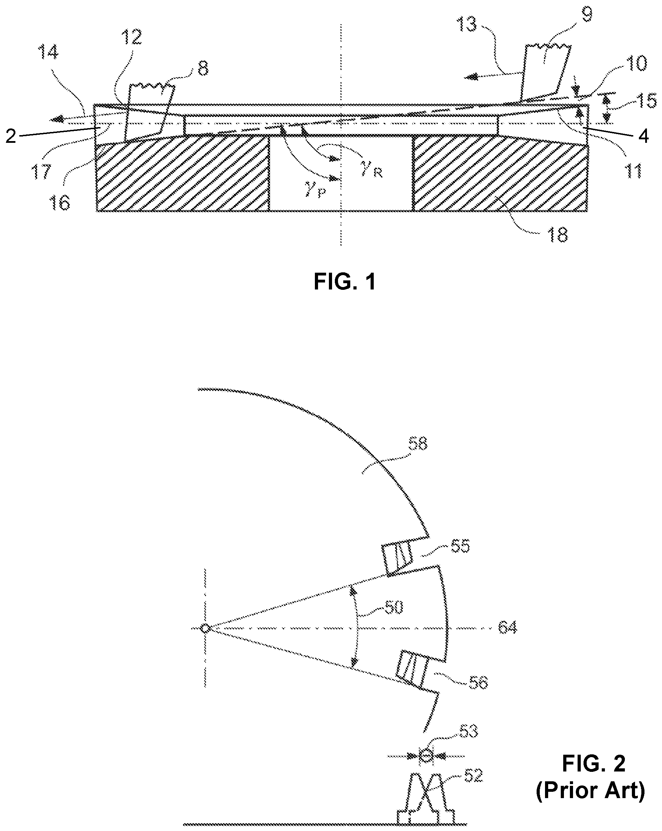

Figure 1 shows a cross-sectional view of a face coupling 18 with the top 12 of a tooth 2 in the cutting zone and the top 11 of a tooth 4 in an opposite section of the face coupling. The pitch line 17 and the root line 16 are angularly differentiated by a dedendum angle 15. The cutting blade 8 moves with a velocity 14 through the cutting zone while the cutting blade 9 moves with a velocity 13 above a tooth at the opposite section. The distance 10 between the top 11 of tooth 4 at the opposite section and the tip of the blades is achieved by the dedendum angle 15 between pitch line 17 and root line 16. Angle $\gamma_P$ is the pitch angle and angle $\gamma_R$ is the root angle of the face coupling.

With reference to Figure 1, face couplings with a pitch angle $\gamma_P$ of 90° or close to 90° present the problem that a circular face cutter head requires clearance 10 between its blade tips and the face cone of the blank in a section of the blank (e.g. tooth 4) which is located about opposite to the section where the active cutting takes place (e.g. tooth 2). This clearance can only be established if the root cone angle of the face coupling has a dedendum angle 15, which is dependent on the coupling diameter, generally between 1.5° and 4.0°. Gears which are cut in a continuous process (face hobbing) have a proportional slot width taper and a proportional tooth thickness taper along the face width. This rule applies in the standard case where face hobbing cutters with equally spaced blades are used. Coupling members are in all common cases required to be mirror images of each other. A proportional slot width taper along the face width, which is equal to the tooth thickness taper presents the only geometrical solution for mirror image couplings members in order for the teeth of the one member to fit exactly into the slots of the other member.

Figure 2 shows a conventional face hobbing cutter with equally spaced outside blade slots 56 and inside blade slots 55. Equally spaced means that the angle 50 is exactly half the angle between two preceding outside blades and/or two preceding inside blades. The cutting edges of outside blade and inside blade cross each other (if rotated into an axial plane) at reference point 52. If the convex flanks and the concave flanks of the coupling are cut in a completing cycle, then the blades of the cutter have to be spaced equally with angle 50 in order to achieve the required constant slot width and tooth thickness taper. The blade point radii have to be adjusted such that the radius of the inside blades and the radius of the outside blades are equal at the reference point 52 (point between blade addendum and blade dedendum). Small deviations from this rule can be applied to control tooth thickness and backlash.

Certain amounts of length crowning are required in most cases of coupling gears. Length crowning can be achieved by changing the blade point radii (larger outside blade radius and smaller inside blade radius) or by applying cutter head tilt. In the completing process, both flanks of one slot are cut with the same cutter (containing inside and outside blades) and with the same machine settings. A change of the blade point radii would also change the slot width which is not permissible. Using a cutter head tilt (i.e. tilting the axis of the cutter head) to achieve length crowning will require large amounts of tilt because of the commonly small pressure angles of couplings (5° to 15° is common). Large amounts of cutter head tilt will also reduce the clearance gap 10 (Figure 1) and most likely lead to gear face mutilations.

The inclination of the cutter head with respect to the dedendum angle 15 will cause a flank form deviations in form of spiral angle errors which do not cancel out between the two coupling members. If the coupling members are cut in a completing process, there will then be no geometric or kinematic freedom available to eliminate the mismatch between the two members.

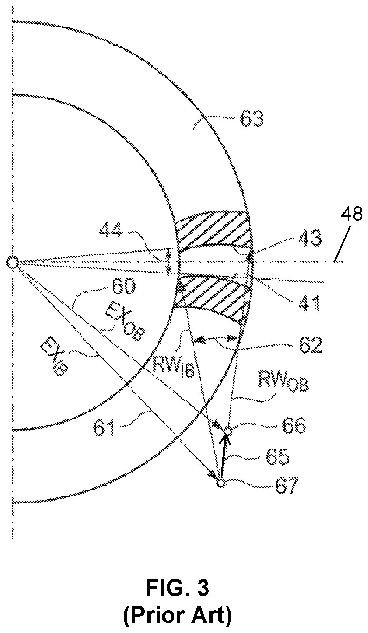

Figure 3 shows a top view of a generating gear 63 for a face coupling with only two teeth and one tooth slot being represented for ease of explanation and illustration. The rotational position of generating gear 63 is adjusted such that 50% of angle 44 is above the center line 48 and 50% is below the center line 48. Both cutter parts (for convex and concave flank cutting) have different cutter radii (to realize length crowning) and need to accommodate different spiral angles (in order to compensate for the spiral angle errors caused by the dedendum angle 15). Cutting of a face hobbed coupling in a completing process requires therefore different machine settings for the cutter part which carries the inside blades versus the cutter part which carries the outside blades. The direction and length of vector $RW_{IB}$ defines the length and direction of the vector $EX_{IB}$ (61) which represents all machine settings required for the positioning the inside blade part of the interlocking cutter head (discussed below). The direction and length of vector $RW_{OB}$ defines the length and direction of the vector $EX_{OB}$ (60) which represents all machine settings required for the positioning the outside blade part of the interlocking cutter head. The magnitude and angular orientation of the difference vector 65 between the inside blade cutter center 67 and the outside blade cutter center 66 is a sufficient definition for the set-up of an imbedded double spindle arrangement of a cutting machine as discussed below.

Generating gear 63 shows two face cutters, symbolized by the cutter center vectors 60 and 61. The blade cutting edges are crossing initially in point 52, but then receive radial corrections to accommodate the desired length crowning. The cutter centers receive further corrections regarding their location to correct for the spiral angle errors caused by the dedendum angle 15.

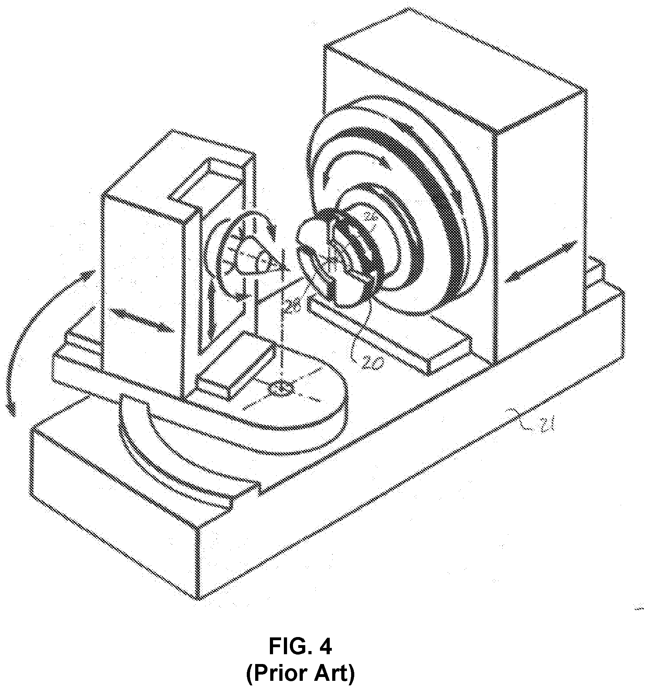

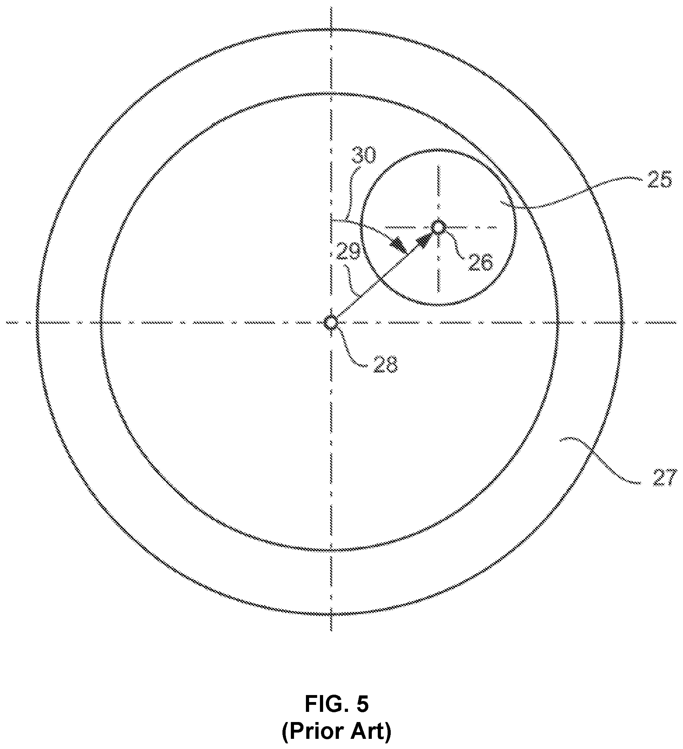

Figure 4 shows a known type of bevel gear cutting machine 21 with an interlocking face cutter head 20, where one part of the cutter carries inside blades and another part carries outside blades. The cutting machine has an imbedded double spindle arrangement (Figure 5) where an inner spindle 25 has a different center location 26 versus the center location 28 of an outer spindle 27. The outer spindle 27 carries the adjustable inner spindle 25. The radial position of center 26 can be adjusted versus center 28 in two ways. The first adjustment changes the length of the center distance vector 29. The second adjustment changes the direction of the center distance vector 29 defined by the angle 30. The interlocking cutter head 20 has different radii of the blades of the two individual parts. The radius difference is generally equal to the length of vector 29.

The two cutters with their center location 66 and 67 (Figure 3) can be converted into one interlocking cutter on machine 21 in order to perform a completing process. The design of the interlocking cutter 20 and the machine spindles 25 and 27 have to include the ability to adjust the effective spacing angle 62 between the inside and the outside blades.

The state of the art solution for the manufacture of face couplings requires a cutter spindle design which is complicated and expensive. Also, the required interlocking cutter head 20 is difficult to manufacture and has limited stiffness. The result is a slow and inefficient process.

US 3,961,403 discloses a cutter head assembly with blade receiving slots set at specific angles so as to permit removal, resharpening, and replacement of different types of blades.

US 4,093,391 discloses a milling cutter head having a substantially disc-shaped carrier body that is surrounded by a locking ring.

EP 2 871 015 A1 discloses a gear hobbing tool where milling inserts are mounted - suitably two by two - in ship removal units that are detachably connected to the head.

EP 2 412 467 A1, in order to among other provide for a good load bearing pattern for the coupling of a bevel gear with a pinion, discloses a cutter having a first cutting edge and a second cutting edge on the same bar cutter to replace separated inner cutter and outer cutter.

US 4,514,118 discloses a method and its advantages to influence, and substantially avoid the tooth twist, thereby allowing a relatively large number of blade or cutter groups.

The invention comprises a method of manufacturing of spiral toothed face couplings according to claim 1 whereby a two-part cutter and a two-part machine tool spindle are not needed. The process includes a set-over between the cutting of convex and concave tooth surfaces and the tool comprises inside and outside cutting blades positioned in a single cutter head blade slot and separated from one another by a blade spacing angle.

Brief Description of the Drawings

Figure 1 shows a cross sectional view of a face coupling with the top of a tooth in a cutting zone and the top of a tooth in the opposite section of the face coupling.

Figure 2 illustrates a conventional face hobbing cutter with equally spaced outside cutting blade slots and inside cutting blade slots.

Figure 3 shows a top view of a generating gear, with only two teeth with one slot represented, illustrating a conventional set-up for producing a face coupling.

3

Figure 4 shows a bevel gear cutting machine with a double spindle arrangement and an interlocking cutter head where one part of the cutter head carries inside cutting blades and the other part of the cutter head caries outside cutting blades.

Figure 5 illustrates a front view of the imbedded double spindle arrangement of the cutting machine of Figure 4.

Figure 6(a) shows a top view of a generating gear, with only two teeth with one slot represented, illustrating an inventive set-up for producing a the convex tooth flank of a face coupling.

Figure 6(b) shows a top view of a generating gear, with only two teeth with one slot represented, illustrating an inventive set-up for producing a the concave tooth flank of a face coupling.

Figure 7 illustrates a face hobbing cutter according to the invention having a small blade spacing angle and a blade mounting double slot.

Figure 8 shows a face hobbing cutter head comprising double slots.

Figure 9 shows a spiral toothed face coupling produced by a cutter utilizing the cutter head of Figure 8.

Detailed Description of the Preferred Embodiment

The details of the invention will now be discussed with reference to the accompanying drawings which illustrate the invention by way of example only. In the drawings, similar features or components will be referred to by like reference numbers.

The use of "including", "having" and "comprising" and variations thereof herein is meant to encompass the items listed thereafter and equivalents thereof as well as additional items. The use of letters to identify elements of a method or process is simply for identification and is not meant to indicate that the elements should be performed in a particular order.

Although references may be made below to directions such as upper, lower, upward, downward, rearward, bottom, top, front, rear, etc., in describing the drawings, there references are made relative to the drawings (as normally viewed) for convenience. These directions are not intended to be taken literally or limit the present invention in any form. In addition, terms such as "first", "second", "third", etc., are used to herein for purposes of description and are not intended to indicate or imply importance or significance.

The inventive process utilizes one right hand cutter head with inside and outside blades for the manufacture of the right hand coupling member and one left hand cutter with inside and outside blades for the manufacture of the left hand coupling member. The process is not a completing method. Only a single tool spindle is required on a cutting machine for the cutting process. Machines suitable for cutting spiral tooth couplings, such as the machine of commonly-assigned U.S. Patent No. 6,712,566, are readily known to the skilled artisan and are commercially available.

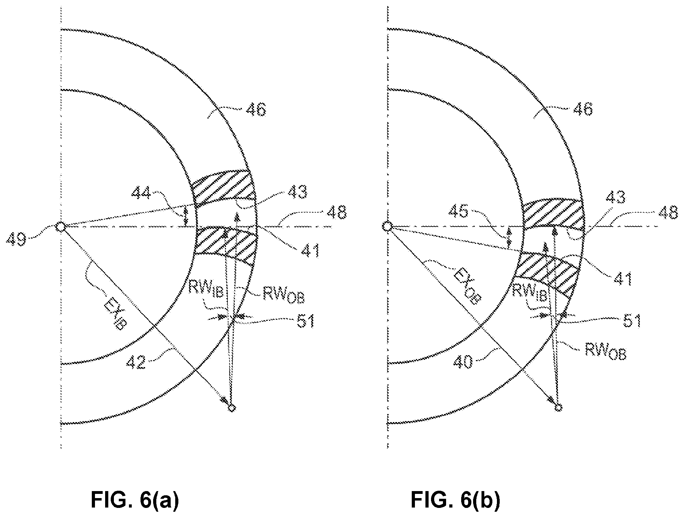

Figure 6(a) shows a top view of a generating gear 46 for a face coupling (the generating gear being identical to the face coupling as stated above) with only two teeth and one tooth slot between them being represented for ease of explanation and illustration. The rotational position of generating gear 46 about its axis 49 is adjusted with respect to angle 44 such that the center point of the convex flank 41 (convex-shaped in lengthwise direction) is contacting the horizontal axis 48 of the coordinate system. The direction and length of vector $RW_{IB}$ defines the length and direction of the vector $EX_{IB}$ (42) which establishes the appropriate machine settings required for the positioning of the cutter head. In the position of generating gear 46, the convex flank 41 is cut and the concave side 43 (concave-shaped in lengthwise direction) is merely pre-cut with a desired finishing stock. The angle 51 is the reduced blade spacing angle of the inventive method.

Figure 6(b) is a top view of a generating gear 46 for a face coupling (the generating gear being identical to the face coupling as stated above) with only two teeth and the tooth slot between them being represented for ease explanation and illustration. The rotational position of generating gear 46 is adjusted with respect to angle 45 such that the center point of the concave flank 43 is contacting the horizontal axis 48 of the coordinate system. The direction and length of vector $RW_{OB}$ defines the length and direction of the vector $EX_{OB}$ (40) which establishes the appropriate machine settings required for the positioning of the cutter head. In the position of generating gear 46, the concave flank 43 is cut and the convex side 41 is not contacted by the inside blades represented by $RW_{IB}$.

As shown in Figure 6(a), an initial plunging is performed with a first set of machine settings represented by 42 ($EX_{IB}$) which makes the inside blades form the convex flanks 41. After reaching the full depth position, a transition to a second set of machine settings 40 ($EX_{OB}$) occurs (which includes a generating gear axis set-over rotation) as shown by Figure 6(b). At the end of this set-over, the outside blades will cut the concave flanks 43. The cutter withdraws away from the slots and both convex and concave flanks (41 and 43) as well as the bottoms of the tooth slots are finished. While it is preferred the cutter remain at the full-depth position during the set-over, the cutter may be withdrawn after the initial flanks (i.e. convex or concave) are cut, followed by the set-over and then plunging again to cut the remaining flanks (i.e. concave or convex).

The set-over between convex and concave flank cutting is required because of the different machine settings needed for convex and concave cutting. The particular machine settings are dependent on individual machine kinematics as will be understood by the skilled artisan but must be set in accordance with Figures 6(a) and 6(b). While changing the machine settings, a certain stock allowance for a sufficient cleanup of the second cut concave flanks is additionally required. If the blade spacing angle 51 was zero, then the generating gear axis set-over rotation would be equal to the angle 44 (shown before the rotation) or 45 (shown after the rotation). The correct generating gear set-over rotation angle DW12Z is calculated with equation (8) below by employing the blade spacing angle WAME.

The equally spaced conventional face hobbing cutter (Figure 2) would create tooth thicknesses and slot widths which are equal. However, due to the spiral angle error caused by the dedendum angle 15 (Figure 1), the flank surfaces would be incorrect. A set-over due to different machine settings would not be possible, because it would increase the slot width and deliver incorrect parts.

In order to form flank lead lines with a desired length crowning between the two coupling members the outside blade point radius has to be increased and/or the inside blade point radius has to be reduced. This is not possible with an equally spaced face hobbing cutter head (negative blade distance difference 53 as seen in Figure 2), because this will additionally increase the slot width.

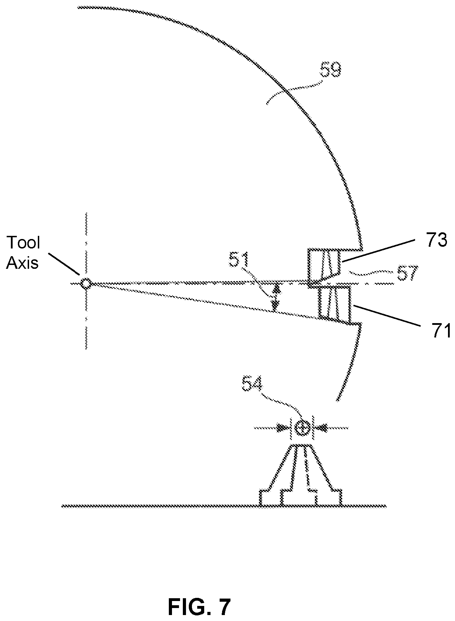

In order to change the cutter blade radii to achieve length crowning and to allow for the set-over between the convex and concave flank cutting, a sufficient amount of "room" between the two flanks 41, 43 has to be available. The inventive process utilizes therefore a modified cutter head 59 design (Figure 7) with a very small or even zero blade spacing angle 51 between the leading outside blade 71 and the following inside blade 73. Zero blade spacing is possible, if the same blade is used for example with its outside edge as outside blade and with its inside edge as inside blade. Zero blade spacing is also possible if two "half blades" were mounted next to each other in the same slot. The preferred embodiment however is the design of a double slot 57 which contains both an outside blade 71 and an inside blade 73 with a small spacing angle 51. This case makes it possible to prepare both inside and outside blades with positive side rake angles for an optimal chip removal process. For ease of illustration, only one slot 57 with two cutting blades 71, 73 is shown in Figure 7 but it should be understood that any number of slots (e.g. nine) with the appropriate number of cutting blades (e.g. two blades per slot) are envisioned.

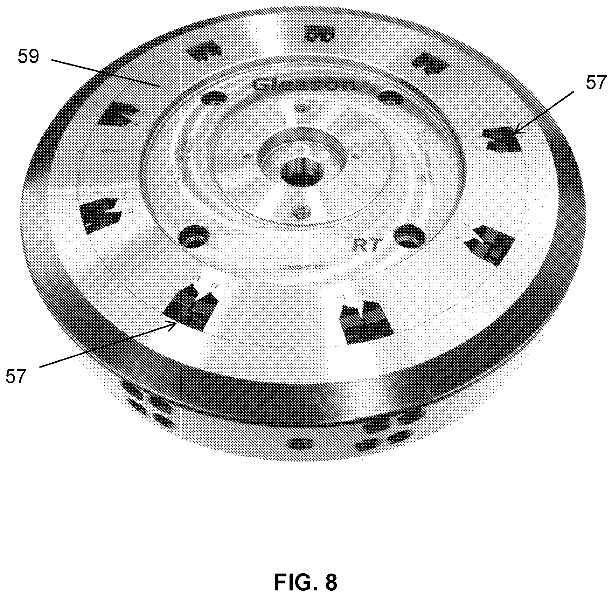

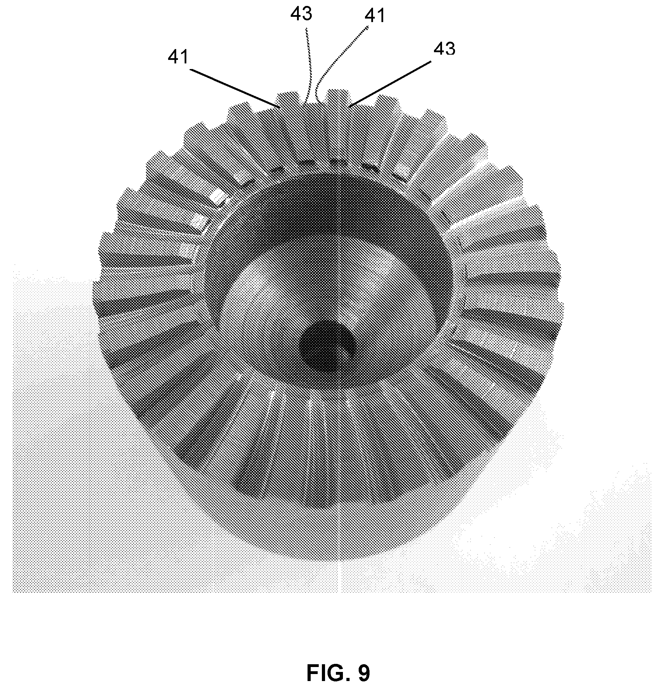

In one example of the invention , a face hobbing cutter head 59 as shown in Figure 8 having a nominal radius of 125 mm and including nine double slots 57 was utilized to produce a spiral toothed face coupling. An inside cutting blade and an outside cutting blade were positioned in each double slot (e.g. cutting blades 73 and 71 of Figure 7) with the inside cutting blade positioned at a blade spacing angle of 5.6 degrees behind the leading outside cutting blade. The cutter head was utilized in accordance with the inventive set-over method discussed above to cut a spiral toothed face coupling (Figure 9) having 24 teeth, an outer diameter of 60 mm and a face width of 13 mm.

The following calculations are required to compute the final blade radii as well as the generating gear axis set-over angle.

The final slot width angle is:

$$SLTW = \pi/Z \tag{1}$$

The slot width cut by plunging with DRCOW = 0 depends only on the blade spacing angle WAME (51), the number of cutter starts $Z_C$ and the number of coupling teeth Z:

$$SLCT = [(WAME * Z_C)/ Z] \tag{2}$$

The stock allowance angle is chosen between 0 and (SLTW-SLCT):

$$SCST = 0.6mm/RM \tag{3}$$

The maximal increase of the outside blade radius and the maximal reduction of the inside blade radius in order to leave the desired stock allowance after plunging is:

$$DRMAX = [(SLTW-SLCT-SCST) / 2] * RM \tag{4}$$

The effective radii increase and reduction has to be equal or smaller than DRMAX:

DRCOW… calculated for desired length crowning

$$\text{If DRCOW} > \text{DRMAX} \rightarrow \text{DRCOW} = \text{DRMAX} \qquad (5)$$

The inside blade and outside blade cutter radius calculation at the reference point is calculated as:

$$RW_{IB} \qquad = RW0 - DRCOW \qquad (6)$$

$$RW_{OB} \qquad = RW0 + DRCOW \qquad (7)$$

Although the radius difference has to be considered for leaving the desired stock allowance value when cutting the first tooth flank (convex flank), it has no influence on the generating gear axis set-over rotation DW12Z:

$$DW12Z = \text{SLTW-}\pi/Z *[\text{WAME}/(\pi/Z_C)] \qquad (8)$$

Where:

SLTW      final slot width angle
SLCT      slot width produced by unequally spaced blades in cutter
SCST      stock allowance angle for set-over from convex flank cutting to concave flank
DRMAX     maximal radius difference to allow for set-over stock allowance
DRCOW     radius difference in reference point 52 for desired length crowning
$RW_{IB}$      inside blade reference radius (see Figure 3)
$RW_{OB}$      outside blade reference radius (see Figure 3)
$Z_C$       number of cutter blade starts
Z         number of coupling teeth
RM        generating gear mean radius
WAME      blade spacing angle (51)

The two sets of machine settings are determined by considering the different radii of $RW_{IB}$ and $RW_{OB}$ and by the direction of the radius vectors $RW_{IB}$ and $RW_{OB}$. The radius vector direction is defined by the spiral angle of the coupling (commonly 0°) and by the spiral angle correction which becomes necessary if the dedendum angle 15 is not equal to zero. The set-over rotation of the generating gear depends on the blade spacing difference between angles 51 and 50. The set-over rotation does not depend on the blade distance difference.

While the invention has been described with reference to preferred embodiments it is to be understood that the invention is not limited to the particulars thereof. The present invention is intended to include modifications which would be apparent to those skilled in the art to which the subject matter pertains without deviating from the scope of the appended claims.

## Claims

1. A method of manufacturing spiral tooth face couplings (18) having a plurality of teeth (2, 4) with each of said teeth having concave and convex tooth flanks (41, 43), said method comprising:

   providing a face hobbing cutter (59) rotatable about a cutter axis and having a plurality of cutting blade slots (57) arranged spaced about a face of the cutter with at least a first cutting blade (71) and a second cutting blade (73) positioned in each of said slots, wherein said first and second cutting blades in each of said slots being spaced from one another by a spacing angle (51) or having even zero blade spacing angle between the first cutting blade and the following second cutting blade,
   rotating said face hobbing cutter (59) and rotating a face coupling workpiece (18),
   engaging said face hobbing cutter with said face coupling workpiece in a continuous indexing manner at a first machining position, wherein one of said first cutting blade and said second cutting blade produces one of a finished concave (43) or a finished convex tooth flank (41) surface on each of said teeth of said face coupling workpiece,

repositioning said face hobbing cutter and said face coupling workpiece at a second machining position based on said spacing angle, and

engaging said face hobbing cutter with said face coupling workpiece in a continuous indexing manner at said second machining position, wherein the other of said first cutting blade and said second cutting blade produces the other of a finished concave (43) or a finished convex (41) tooth flank surface on each of said teeth of said face coupling workpiece,

wherein the method involves a set-over between the cutting of the convex and concave tooth flank surfaces in form of a generating gear set-over rotation with generating gear set-over rotation angle

$$DW12Z = SLTW - \pi/Z \cdot [WAME / (\pi/Z_C)]$$

wherein SLTW is the final slot width angle being $\pi/Z$, Z is the number of coupling teeth, $Z_C$ is the number of cutter blade starts and WAME is the blade spacing angle (51).

2. The method of claim 1 wherein at said first machining position, said face hobbing cutter is fed into said face coupling workpiece to a full depth position followed by said repositioning while said face hobbing cutter remains at said full depth position.

3. The method of claim 1 wherein at said first machining position, said face hobbing cutter is fed into said face coupling workpiece to a full depth position, said cutter is then withdrawn from the face coupling workpiece followed by said repositioning to said second machining position and then feeding said cutter said face coupling workpiece to said full depth position.


**Patentansprüche**

1. Verfahren zur Herstellung von spiralförmigen Zahnkopfflankenkupplungen (18) mit einer Vielzahl von Zähnen (2, 4), wobei jeder der Zähne konkave und konvexe Zahnflanken (41, 43) aufweist, wobei das Verfahren Folgendes umfasst:

Bereitstellen eines Fräsers (59) für kontinuierliches Fräsen, der um eine Fräserachse drehbar ist und eine Vielzahl von Fräsmesserschlitzen (57) aufweist, die in einem Abstand um eine Fläche des Fräsers angeordnet sind, wobei mindestens ein erstes Fräsmesser (71) und ein zweites Fräsmesser (73) in jedem der Schlitze positioniert sind, wobei das erste und das zweite Fräsmesser in jedem der Schlitze um einen Abstandswinkel (51) voneinander beabstandet sind oder sogar einen Null-Abstandswinkel zwischen dem ersten Fräsmesser und dem folgenden zweiten Fräsmesser aufweisen,

Drehen des Fräsers (59) für kontinuierliches Fräsen und Drehen eines gekoppelten entsprechenden Werkstücks (18),

In-Eingriff-Bringen des Fräsers für kontinuierliches Fräsen mit dem gekoppelten entsprechenden Werkstück in einer fortlaufenden Indexierungsweise an einer ersten Bearbeitungsposition, wobei eines von dem ersten Fräsmesser und dem zweiten Fräsmesser eines von einer fertigen konkaven (43) und einer fertigen konvexen (41) Zahnflankenoberfläche an jedem der Zähne des gekoppelten entsprechenden Werkstücks erzeugt,

Neupositionieren des Fräsers für kontinuierliches Fräsen und des gekoppelten entsprechenden Werkstücks in einer zweiten Bearbeitungsposition basierend auf dem Abstandswinkel, und

In-Eingriff-Bringen des Fräsers für kontinuierliches Fräsen mit dem gekoppelten entsprechenden Werkstück in einer fortlaufenden Indexierungsweise an der zweiten Bearbeitungsposition, wobei das andere von dem ersten Fräsmesser und dem zweiten Fräsmesser das andere von einer fertigen konkaven (43) und einer fertigen konvexen (41) Zahnflankenoberfläche an jedem der Zähne des gekoppelten entsprechenden Werkstücks erzeugt,

wobei das Verfahren ein Umstellen zwischen dem Fräsen der konvexen und konkaven Zahnflankenoberfläche in Form einer Wälzradumstellung mit Wälzradumstellungswinkel beinhaltet

$$DW12Z = SLTW - \pi/Z \cdot [WAME/(\pi/Z_C)]$$

wobei SLTW der endgültige Zahnschlitzbreitenwinkel $\pi/Z$ ist, Z die Anzahl von koppelnden Zähnen ist, $Z_C$ die Anzahl von Fräsmesseranfängen ist und WAME der Messerabstandswinkel (51) ist.

**2.** Verfahren nach Anspruch 1, wobei in der ersten Bearbeitungsposition der Fräser für kontinuierliches Fräsen in das gekoppelte entsprechende Werkstück bis zu einer vollen Tiefenposition vorgeschoben wird, gefolgt von der Neupositionierung, während der Fräser für kontinuierliches Fräsen in der vollen Tiefenposition bleibt.

**3.** Verfahren nach Anspruch 1, wobei in der ersten Bearbeitungsposition der Fräser für kontinuierliches Fräsen in das gekoppelte entsprechende Werkstück bis zu einer vollen Tiefenposition vorgeschoben wird, der Fräser dann aus dem gekoppelten entsprechenden Werkstück herausgezogen wird, gefolgt von der Neupositionierung in die zweite Bearbeitungsposition und dem anschließenden Vorschieben des Fräsers in das gekoppelte entsprechende Werkstück bis zu der vollen Tiefenposition.

**Revendications**

**1.** Procédé de fabrication de couplages de face à denture en spirale (18) comportant une pluralité de dents (2, 4), chacune desdites dents présentant des flancs de dent concave et convexe (41, 43), ledit procédé comprenant :

la fourniture d'une fraise à tailler en division (59) susceptible de tourner sur un axe de fraise et comportant une pluralité de rainures pour lames de coupe (57) agencées espacées autour d'une face de la fraise avec au moins une première lame de coupe (71) et une deuxième lame de coupe (73) positionnées dans chacune desdites rainures, lesdites première et deuxième lames de coupe présentes dans chacune desdites rainures étant espacées l'une de l'autre selon un angle d'espacement (51) ou ayant même un angle d'espacement nul entre la première lame de coupe et la deuxième lame de coupe suivante,
la mise en rotation de ladite fraise à tailler en division (59) et la mise en rotation d'une pièce d'usinage pour couplage de face (18),
la pénétration de ladite fraise à tailler en division dans ladite pièce d'usinage pour couplage de face avec indexage continu en une première position d'usinage, l'une desdites première et deuxième lames de coupe produisant l'une des surfaces de flanc de dent parmi une surface concave finie (43) et une surface convexe finie (41) sur chacune desdites dents de ladite pièce d'usinage pour couplage de face,
le repositionnement de ladite fraise à tailler en division et de ladite pièce d'usinage pour couplage de face en une deuxième position d'usinage compte tenu dudit angle d'espacement, et
la pénétration de ladite fraise à tailler en division dans ladite pièce d'usinage pour couplage de face avec indexage continu à ladite deuxième position d'usinage, l'autre desdites première et deuxième lames de coupe produisant l'autre des surfaces de flanc de dent parmi une surface concave finie (43) et une surface convexe finie (41) sur chacune desdites dents de ladite pièce d'usinage pour couplage de face,
ledit procédé impliquant un décalage entre le taillage des surfaces de flanc de dent convexe et concave sous la forme d'une rotation avec décalage de roue génératrice avec un angle de rotation avec décalage de roue génératrice

$$DW12Z = SLTW - \pi/Z \cdot [WAME/(\pi/Z_C)]$$

où SLTW est l'angle de largeur d'entredent final soit $\pi/Z$, Z est le nombre de dents du couplage, $Z_C$ est le nombre de départs de lame de coupe et WAME est l'angle d'espacement de lames (51).

**2.** Procédé selon la revendication 1, dans lequel, à ladite première position d'usinage, ladite fraise à tailler en division est introduite dans ladite pièce d'usinage pour couplage de face jusqu'à une position de profondeur maximale, avant d'être repositionnée tandis que ladite fraise à tailler en division reste à ladite position de profondeur maximale.

**3.** Procédé selon la revendication 1, dans lequel, à ladite première position d'usinage, ladite fraise à tailler en division est introduite dans ladite pièce d'usinage pour couplage de face jusqu'à une position de profondeur maximale, ladite fraise est ensuite retirée de la pièce d'usinage pour couplage de face avant d'être repositionnée à la deuxième position d'usinage puis introduite dans la pièce d'usinage pour couplage de face jusqu'à ladite position de profondeur maximale.

**FIG. 1**

**FIG. 2
(Prior Art)**

**FIG. 3**
**(Prior Art)**

FIG. 4
(Prior Art)

FIG. 5
(Prior Art)

**FIG. 6(a)**

**FIG. 6(b)**

Tool Axis

59

73

51

57

71

54

**FIG. 7**

**FIG. 8**

**FIG. 9**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3961403 A
- US 4093391 A
- EP 2871015 A1
- EP 2412467 A1
- US 4514118 A
- US 6712566 B